# EUROPEAN PATENT SPECIFICATION

(11) **EP 3 321 496 B1**
(45) Date of publication and mention of the grant of the patent: **19.02.2020**
(21) Application number: 17200657.9
(22) Date of filing: 08.11.2017
(51) Int. Cl.: F02M 35/04, F02M 35/08, F02M 35/16, F02M 35/02, F02M 35/10, B62J 99/00

(54) **SCOOTER TYPE MOTORCYCLE**
ROLLERARTIGES MOTORRAD
MOTOCYCLETTE DE TYPE SCOOTER

(30) Priority: 09.11.2016 JP 2016219017
(43) Date of publication of application: 16.05.2018
(73) Proprietor: Yamaha Hatsudoki Kabushiki Kaisha, Iwata-shi Shizuoka 438-8501 (JP)
(72) Inventor: YUIZONO, Jun, Iwata-shi, Shizuoka 438-8501 (JP); NAGATA, Takuya, Iwata-shi, Shizuoka 438-8501 (JP); HIGAKI, Yuji, Iwata-shi, Shizuoka 438-8501 (JP)
(74) Representative: Grünecker Patent- und Rechtsanwälte PartG mbB

(56) References cited:
- EP-A1- 1 533 515
- EP-A1- 2 527 179
- EP-A1- 2 952 708
- EP-A2- 1 186 771
- EP-A2- 1 526 273

## Description

The present invention relates to a scooter type motorcycle according to the preamble of independent claim 1. Such a scooter type motorcycle can be taken from the prior art document EP 2 527 179 A1. An intake port of the air intake means is located at a position forward relative to a vehicle front and aft midpoint of the air cleaner case and said port is directly open to the left side of the vehicle, i.e. the side opposite to the side of location of the rear wheel. A labyrinth structure is provided to prevent entrance of mud and water from the right side, i.e. from the side of location of the rear wheel directly under the intake port.

A scooter type motorcycle is conventionally known which is equipped with an internal combustion engine, a V-belt type continuously variable transmission (hereinafter referred to as "CVT"), and an air cleaner disposed above a transmission case accommodating the CVT.

The CVT produces heat during operation. When the temperature of the CVT rises, the durability of the V-belt deteriorates. In an attempt to improve the durability of the V-belt, air is introduced into the transmission case so that the CVT is cooled by the air. However, if dust or water adheres to the V-belt, the performance of the CVT degrades. In order to ensure sufficient performance for the CVT, it is important to prevent water and dust from entering the transmission case.

JP 2007-314165 A discloses a scooter type motorcycle in which a long duct extending upward is fitted to the transmission case. Because the duct extends upward, the inlet of the duct is disposed at a relatively high position. As a result, mud and dust swirled up from the road surface are unlikely to get into the inlet of the duct.

JP 2012-245890 A discloses a scooter type motorcycle furnished with an air cleaner case in which an intake chamber for the CVT and an intake chamber for the engine are formed. The transmission case is provided with a short duct extending upward. In this motorcycle, the portion of the air cleaner case that defines the intake chamber for the CVT is disposed above the duct of the transmission case. The surrounding region around the inlet of the duct is covered by the just-mentioned part of the air cleaner case. This prevents dust and water from entering the duct.

The scooter type motorcycle disclosed in JP 2007-314165 A necessitates a long duct extending upward from the transmission case. This causes the scooter type motorcycle to become larger in size. In the scooter type motorcycle disclosed in JP 2012-245890, the inlet of the intake chamber for the CVT and the inlet of the intake chamber for the engine are disposed next to each other. If one of the inlets takes in a large amount of air, the other one of the inlets may not be supplied with a sufficient amount of air. For example, when the engine rotational speed is high, both the engine and the CVT require a large amount of intake air. in such a case, when the two inlets are disposed next to each other, the air may be taken in mostly from one of the inlets with a larger air intake amount, so a sufficient amount of air may not be taken in from the other one of the inlets.

The present invention has been accomplished in view of the foregoing and other problems, and it is an object of the invention to provide a scooter type motorcycle that prevents dust and water from entering the air cleaner and the CVT, inhibits the vehicle size from getting larger, and is capable of supplying a sufficient amount of air to both the air cleaner and the CVT. According to the present invention said object is solved by a scooter type motorcycle having the features of independent claim 1. Preferred embodiments are laid down in the dependent claims.

Accordingly, a scooter type motorcycle includes: a rear wheel; a transmission case disposed sideward of the rear wheel - the transmission case is disposed at least partly overlapping of the rear wheel in a side view of the motorcycle, i.e. the view along a lateral axis in left/right direction -; a V-belt type continuously variable transmission disposed in the transmission case; a first intake duct provided on the transmission case and including a first inlet positioned frontward relative to a vehicle fore-and-aft midpoint of the transmission case; an air cleaner case disposed above the transmission case - the air cleaner case is disposed at least partly overlapping of the transmission case in a top view of the motorcycle, i.e. the view along a vertical axis in up/down direction -; a second intake duct provided on the air cleaner case and including a second inlet positioned frontward relative to a vehicle fore-and-aft midpoint of the air cleaner case; an air cleaner case cover disposed laterally outward of the air cleaner case and the second intake duct; a transmission case cover disposed laterally outward of the transmission case and the first intake duct and disposed below the air cleaner case cover- the transmission case cover is disposed at least partly overlapping of the transmission case cover in a bottom view of the motorcycle, i.e. the view along a vertical axis in up/down direction -; and a partition plate disposed between the first inlet of the first intake duct and the second inlet of the second intake duct. The area of the opening between the air cleaner case cover and the transmission case cover is larger than a minimum flow passage cross-sectional area of the first intake duct. A side intake port for sucking air toward the first inlet is formed between the air cleaner case cover and the transmission case cover, and laterally outward of the first inlet. A rear intake port for sucking air toward the second inlet is formed between the air cleaner case cover and the transmission case cover, and rearward relative to the first inlet. At least a portion of the rear intake port is disposed laterally inward relative to the side intake port.

The just-described scooter type motorcycle does not require a long duct extending upward from the transmission case. This prevents the vehicle from getting larger in size. The first inlet of the first intake duct for introducing air into the transmission case is supplied with the air that is sucked from the side intake port formed between the air cleaner case cover and the transmission case cover. The second inlet of the second intake duct for introducing air into the air cleaner case is supplied with the air that is sucked from the rear intake port formed between the air cleaner case cover and the transmission case cover. This makes it possible to prevent dust and water from entering the air cleaner and the CVT. Moreover, the first inlet and the second inlet are separated by the partition plate. This makes it possible to supply a sufficient amount of air to both the air cleaner and the CVT. Thus, the just-described scooter type motorcycle prevents dust and water from entering the air cleaner and the CVT, keeps the vehicle size from getting larger, and is capable of supplying a sufficient amount of air to both the air cleaner and the CVT.

According to the invention, a plate member extending laterally is provided on a portion of the transmission case cover rearward of the first intake duct. The air cleaner case cover includes a wall portion being positioned behind the plate member and including a lower end positioned downward relative to an upper end of the plate member. The plate member and the wall portion together form a labyrinth structure positioned rearward of the first intake duct.

The just-described embodiment makes it possible to prevent dust and water from entering the air cleaner from the rear of the first intake duct. This prevents dust and water from entering the CVT.

In a preferred embodiment, the first intake duct includes a portion in which a gap between the first intake duct and the air cleaner case cover or between the first intake duct and the transmission case cover narrows toward an end of the first intake duct.

The just-described preferred embodiment makes it possible to prevent dust and water from entering the first intake duct.

In another preferred embodiment, a rib extending along a vehicle fore-and-aft axis is provided on a portion of the air cleaner case cover above the side intake port - the air cleaner case cover is disposed at least partly overlapping of the side intake port in a top view of the motorcycle, i.e. the view along a vertical axis in up/down direction.

According to the just-described preferred embodiment, water running along the surface of the air cleaner case cover is guided to the rear by the rib easily. This prevents the water from entering the side intake port and thus prevents water from entering the CVT.

In another preferred embodiment, a labyrinth structure is formed above the transmission case - the labyrinth structure is disposed at least partly overlapping of the transmission case in a top view of the motorcycle, i.e. the view along a vertical axis in up/down direction - and laterally inward of the first intake duct.

The just-described preferred embodiment makes it possible to prevent dust and water that are swirled up by the rear wheel from entering the first intake duct. As a result, dust and water are prevented from entering the CVT.

In another preferred embodiment, the first inlet opens upwardly, and the second inlet opens frontwardly at a position rearward relative to the first inlet. the partition plate extends between the first inlet and the second inlet so as to extend gradually downward toward the rear.

The just-described preferred embodiment enables the partition plate to guide air toward the first inlet and the second inlet. This allows a sufficient amount of air to be supplied to both the air cleaner and the CVT.

In another preferred embodiment, the air cleaner case includes: a first side plate extending along a vehicle vertical axis and a vehicle fore-and-aft axis; a vertical plate, disposed upward relative to the transmission case, extending laterally outward from the first side plate and extending along the vehicle vertical axis; a horizontal plate extending rearward from a lower end of the vertical plate and extending along a vehicle lateral axis, the horizontal plate spaced upwardly apart from the transmission case; and a second side plate extending rearward along the vehicle fore-and-aft axis from a laterally outer end portion of the vertical plate and extending along the vehicle vertical axis from a laterally outer end portion of the horizontal plate. The second intake duct penetrates through the vertical plate. The vertical plate, the horizontal plate, and the second side plate together define at least a portion of a downstream intake chamber. The air cleaner case cover includes a spacing portion disposed sideward of the first side plate and spaced apart from the first side plate, an overlaying portion overlaying the second side plate so as not to be spaced apart from the second side plate, and a downwardly-extending portion extending downward from the overlaying portion. The spacing portion of the air cleaner case cover, the first side plate, and the vertical plate together define at least a portion of an upstream intake chamber. The horizontal plate, the transmission case, and the downwardly-extending portion of the air cleaner case cover together form an intake passage being connected to the upstream intake chamber and having the rear intake port.

In the just-described preferred embodiment, the intake passage for introducing air toward the second intake duct is formed between the transmission case and the downwardly-extending portion of the air cleaner case cover. No gap for forming the intake passage is provided between the overlaying portion of the air cleaner case cover and the second side plate of the air cleaner case. As a result, the air cleaner case cover is inhibited from protruding laterally outward, so that the lateral dimension can be kept small. In addition, the inlet of the second intake duct is disposed frontward relative to the vehicle fore-and-aft midpoint of the air cleaner case, and the rear intake port of the intake passage is positioned rearward relative to the vehicle fore-and-aft midpoint of the air cleaner case. This enables the intake passage that is upstream of the second intake duct to have a sufficient length. Thus, the intake passage that is upstream of the second intake duct is allowed to have a sufficient length in the air cleaner, and also the lateral dimension can be kept small.

### ADVANTAGEOUS EFFECTS OF INVENTION

The present invention makes it possible to provide a scooter type motorcycle that prevents dust and water from entering the air cleaner and the CVT, inhibits the vehicle size from getting larger, and is capable of supplying a sufficient amount of air to both the air cleaner and the CVT.

### BRIEF DESCRIPTION OF DRAWINGS

Fig. 1 is a side view illustrating a scooter type motorcycle according to a preferred embodiment.
Fig. 2 is an enlarged side view illustrating a rear portion of the scooter type motorcycle.
Fig. 3 is a plan view illustrating a power unit and a rear wheel.
Fig. 4 is a cross-sectional view taken along line IV-IV in Fig. 2.
Fig. 5 is a cross-sectional view taken along line V-V in Fig. 2.
Fig. 6 is a cross-sectional view taken along line VI-VI in Fig. 2.
Fig. 7 is a side view illustrating an air cleaner and a transmission unit from which an air cleaner case cover has been removed.
Fig. 8 is a cross-sectional view taken along line VIII-VIII in Fig. 3.
Fig. 9 is a cross-sectional view taken along line IX-IX in Fig. 2.

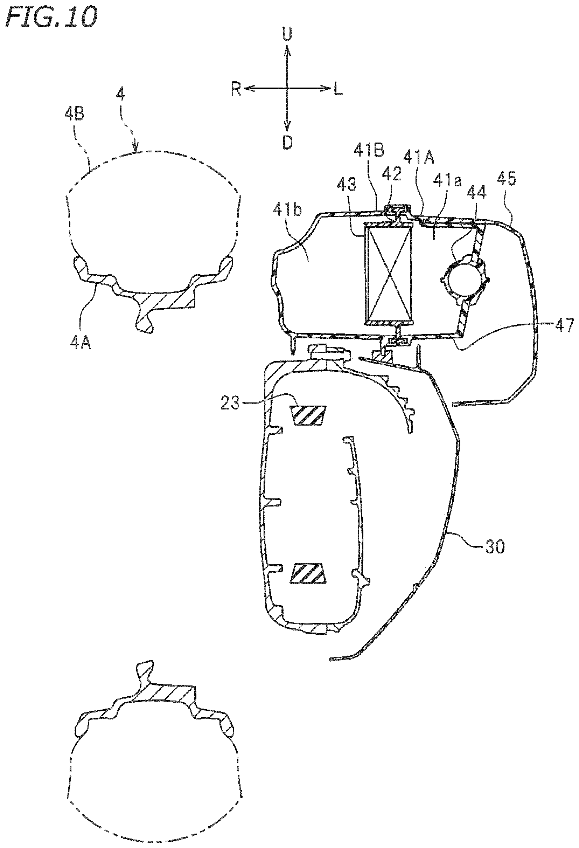

Fig. 10 is a cross-sectional view taken along line X-X in Fig. 2.
Fig. 11 is a cross-sectional view taken along line XI-XI in Fig. 2.
Fig. 12A is a schematic diagram for illustrating an area of opening between an air cleaner case cover and a transmission case cover.
Fig. 12B is a schematic diagram for illustrating areas of opening of a front intake port and a side intake port.

### DESCRIPTION OF EMBODIMENTS

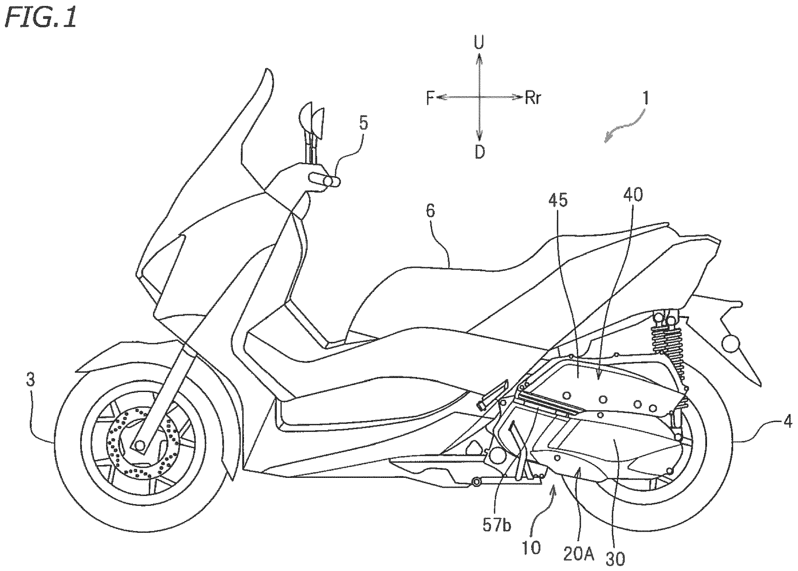

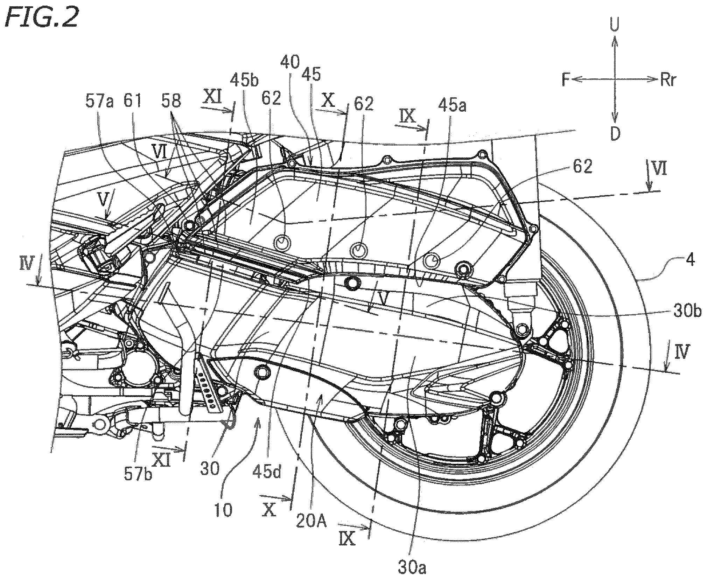

Hereinbelow, a scooter type motorcycle according to one preferred embodiment will be described with reference to the drawings. Fig. 1 is a side view illustrating a scooter type motorcycle (hereinafter referred to simply as "motorcycle") 1 according to the present preferred embodiment. Fig. 2 is an enlarged side view illustrating part of a rear portion of the motorcycle 1. As illustrated in Fig. 1, the motorcycle 1 includes a body frame, which is not shown, a front wheel 3, a rear wheel 4, a handlebar 5, a seat 6, and a power unit 10. The power unit 10 is supported by a pivot shaft (not shown) swingably to the body frame.

In the following description, unless specifically indicated otherwise, the terms "front," "rear," "left," "right," "up," and "down" respectively refer to front, rear, left, right, up, and down as defined based on the perspective of an imaginary rider (not shown) seated on the seat 6 when the motorcycle 1 is assumed to be standing at a standstill on a horizontal plane in an unloaded condition. The phrase "unloaded condition" means a condition in which the motorcycle 1 does not carry any rider or fuel. Reference characters F, Rr, L, R, U, and D in the drawings represent front, rear, left, right, up, and down, respectively. The term "frontward" herein means motorcycle's frontward in its fore-and-aft orientation. The term "rearward" herein means motorcycle's rearward in its fore-and-aft orientation.

Unless specifically indicated otherwise, the term "frontward" is not intended to be limited to a horizontal frontward direction, but is meant to include directions inclined within the range of -45° to +45° with respect to the horizontal frontward direction. Likewise, the term "rearward" is not intended to be limited to a horizontal rearward direction, but is meant to include directions inclined within the range of -45° to +45° with respect to the horizontal rearward direction. The term "leftward" is not intended to be limited to a laterally leftward direction, but is meant to include directions inclined within the range of -45° to +45° with respect to that direction. Likewise, the term "rightward" is not intended to be limited to a laterally rightward direction, but is meant to include directions inclined within the range of - 45° to +45° with respect to that direction. The term "upward" is not intended to be limited to a vertically upward direction, but is meant to include directions inclined within the range of -45° to +45° with respect to the vertically upward direction. The term "downward" is not intended to be limited to a vertically downward direction, but is meant to include directions inclined within the range of -45° to +45° with respect to the vertically downward direction.

Unless specifically indicated otherwise, a "front portion" of an item means a portion of the item that is located frontward relative to the vehicle fore-and-aft midpoint of the item. A "rear portion" of an item means a portion of the item that is located rearward relative to the vehicle fore-and-aft midpoint of the item. An "upper portion" of an item means a portion of the item that is located upward relative to the vertical midpoint of the item. A "lower portion" of an item means a portion of the item that is located downward relative to the vertical midpoint of the item. A "left portion" of an item means a portion of the item that is located leftward relative to the lateral midpoint of the item. A "right portion" of an item means a portion of the item that is located rightward relative to the lateral midpoint of the item. Note that the term "lateral axis" herein is used interchangeably to refer to a vehicle's widthwise axis, i.e., a left-to-right/right-to-left axis.

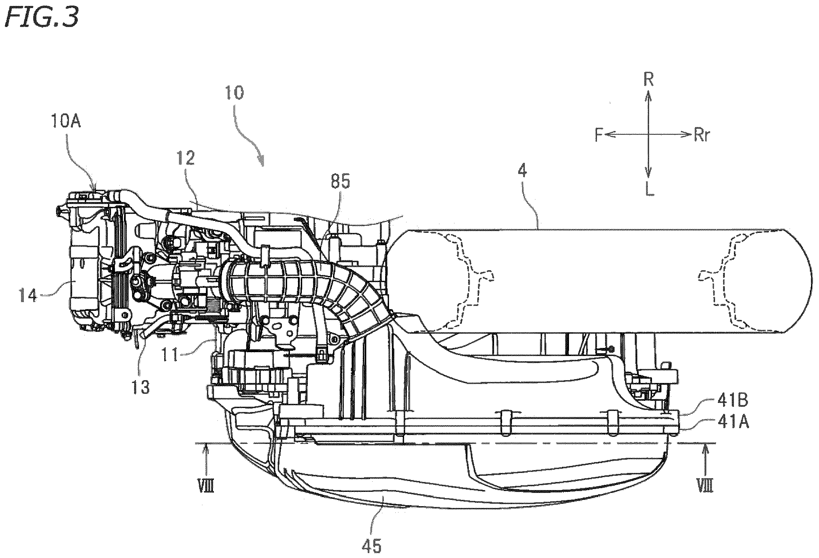

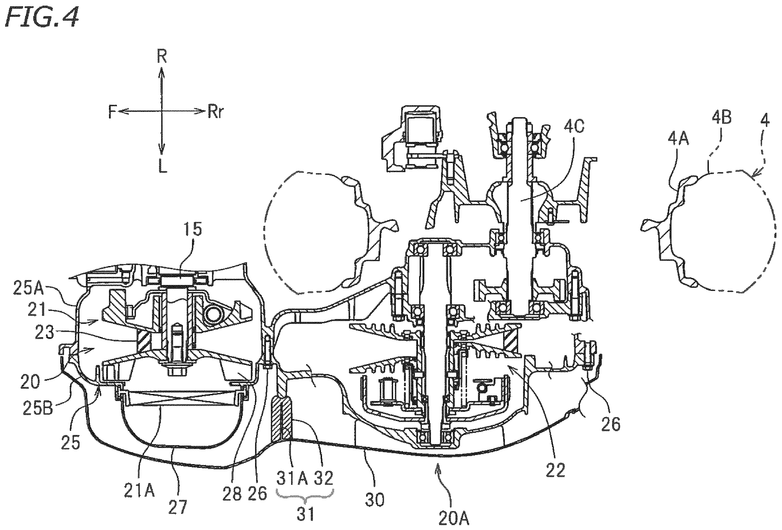

As illustrated in Fig. 3, the power unit 10 includes an internal combustion engine 10A as a driving power source. The power unit 10 includes a crankcase 11, a cylinder body 12 connected to the crankcase 11, a cylinder head 13 connected to the cylinder body 12, and a cylinder head cover 14 connected to the cylinder head 13. A crankshaft 15 (see Fig. 4) is disposed inside the crankcase 11. Although not shown in the drawings, at least one cylinder that slidably accommodates a piston is disposed inside the cylinder body 12. The piston(s) and the crankshaft are coupled to each other via a connecting rod. The cylinder body 12 and the cylinder head 13 together forms a combustion chamber above the piston(s). The center line of the cylinder (i.e., the cylinder axis) extends frontward. The angle formed by the cylinder axis and the horizontal line as viewed in a side view of the vehicle is not limited to any specific angle. However, in the present preferred embodiment, the angle is set at 45 degrees or less. The just-mentioned angle may be from 0 degrees to 30 degrees, or may be from 0 degrees to 15 degrees.

Fig. 4 is a cross-sectional view taken along line IV-IV in Fig. 2. Disposed to the left of the crankcase 11 are a transmission case 25, a V-beit type continuously variable transmission (hereinafter abbreviated as CVT) 20, and a transmission case cover 30 covering a left portion of the transmission case 25. The CVT 20, the transmission case 25, and the transmission case cover 30 together constitute a transmission unit 20A. The transmission case 25 includes a first case part 25A and a second case part 25B. The second case part 25B is disposed laterally outward of the first case part 25A. It should be noted that the term "laterally outward" herein means a direction away from the vehicle center line. On the other hand, the term "laterally inward" herein means a direction toward the vehicle center line. The first case part 25A and the second case part 25B are fastened together by bolts 26.

The CVT 20 includes a drive pulley 21, a driven pulley 22 disposed to the rear of the drive pulley 21, and a V-belt 23 wrapped around the drive pulley 21 and the driven pulley 22. The drive pulley 21 is joined to the crankshaft 15. The drive pulley 21 may be joined directly to the crankshaft 15 or joined indirectly to the crankshaft 15 via another member. The drive pulley 21 is driven by the crankshaft 15 to rotate. The rear wheel 4 includes a wheel 4A, a tire 4B, and an axle shaft 4C. The driven pulley 22 is joined to the axle shaft 4C via gears, which are not shown in the drawings.

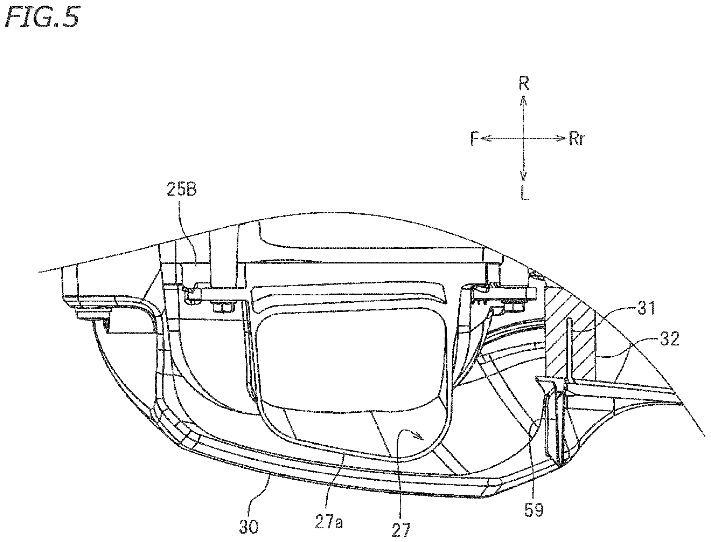

The transmission case 25 is provided with an intake duct 27. The intake duct 27 is provided in the second case part 25B. The drive pulley 21 is provided with a fan 28 for sucking the air. The intake duct 27 is provided laterally outward of the drive pulley 21. A filter 21A is disposed between the drive pulley 21 and the intake duct 27. Fig. 5 is a cross-sectional view taken along line V-V in Fig. 2. The intake duct 27 opens upwardly. The upper end of the intake duct 27 forms an inlet 27a for introducing the air therein. The inlet 27a is disposed frontward relative to the midpoint of the transmission unit 20A along the vehicle fore-and-aft axis. The inlet 27a is disposed frontward relative to the midpoint of the transmission case 25 along the vehicle fore-and-aft axis. The air sucked through the inlet 27a is cleaned by the filter 21A. The cleaned air then flows into the transmission case 25. Although not shown, an air outlet port for discharging air is formed in a portion of the second case part 25B that is beside or below the driven pulley 22. As the fan 28 rotates in association with rotation of the drive pulley 21, the air is sucked from outside through the intake duct 27 into the transmission case 25. After flowing through a surrounding region around the CVT 20, the air is discharged out of the transmission case 25 through the air outlet port. The CVT 20 is cooled by the air.

As illustrated in Fig. 4, the transmission case cover 30 is furnished with a partition 31 extending laterally inward. The partition 31 has a partition plate 31A and a sponge 32. The partition 31 separates the intake duct 27 and the air outlet port from each other. This prevents the hot air that is discharged from the air outlet port from being sucked into the intake duct 27. The sponge 32 is disposed around the partition plate 31A. The sponge 32, however, may be eliminated. The partition 31 may consist only of the partition plate 31A.

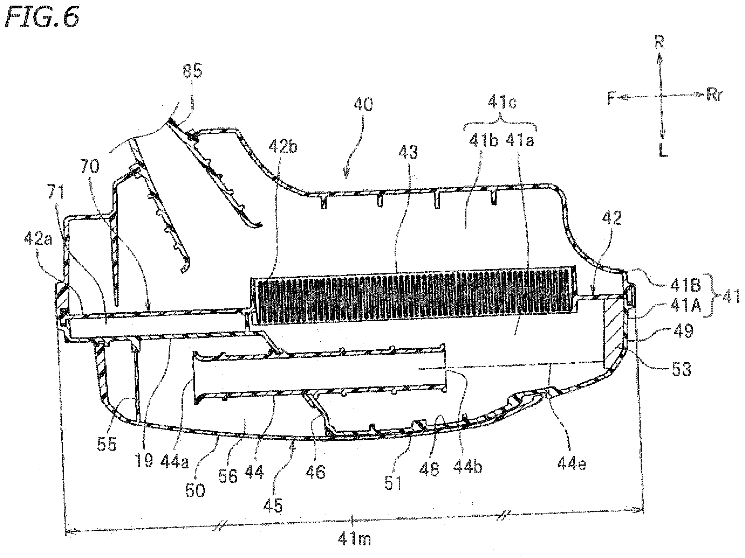

As illustrated in Fig. 2, an air cleaner 40 is disposed above the transmission case 25 and the transmission case cover 30. Fig. 6 is a cross-sectional view taken along line VI-VI in Fig. 2. As illustrated in Fig. 6, the air cleaner 40 includes an air cleaner case 41, a filter element 43, an intake duct 44, and an air cleaner case cover 45.

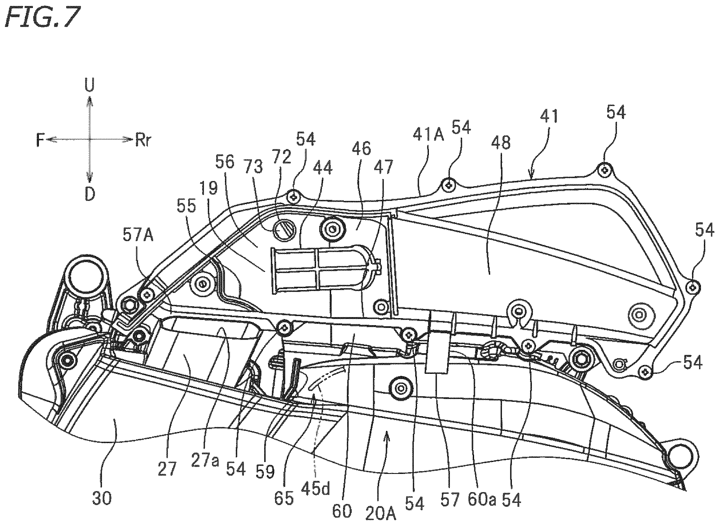

The air cleaner case 41 includes a first case part 41A and a second case part 41 B. The second case part 41B is disposed laterally inward of the first case part 41A. The second case part 41B is assembled to the first case part 41A. Fig. 7 is a side view illustrating the air cleaner 40 and the transmission unit 20A from which the air cleaner case cover 45 has been removed. As illustrated in Fig. 7, the first case part 41A and the second case part 41B are fastened together by bolts 54. As illustrated in Fig. 6, a partition plate 42 is disposed between the first case part 41A and the second case part 41B. The partition plate 42 includes a plate portion 42a and an opening 42b. The filter element 43 is fitted to the opening 42b. The interior of the air cleaner case 41 is divided by the filter element 43 into an unfiltered-air chamber 41a and a filtered-air chamber 41b. The unfiltered-air chamber 41a is positioned to the left of the filter element 43, and the filtered-air chamber 41b is positioned to the right of the filter element 43.

The second case part 41B is connected to an intake pipe 85. The intake pipe 85 has an opening that is open inside the filtered-air chamber 41b. As illustrated in Fig. 3, the intake pipe 85 is connected to the cylinder head 13. Although not shown in the drawings, an intake port is formed in the cylinder head 13, and the intake pipe 85 is connected to the intake port.

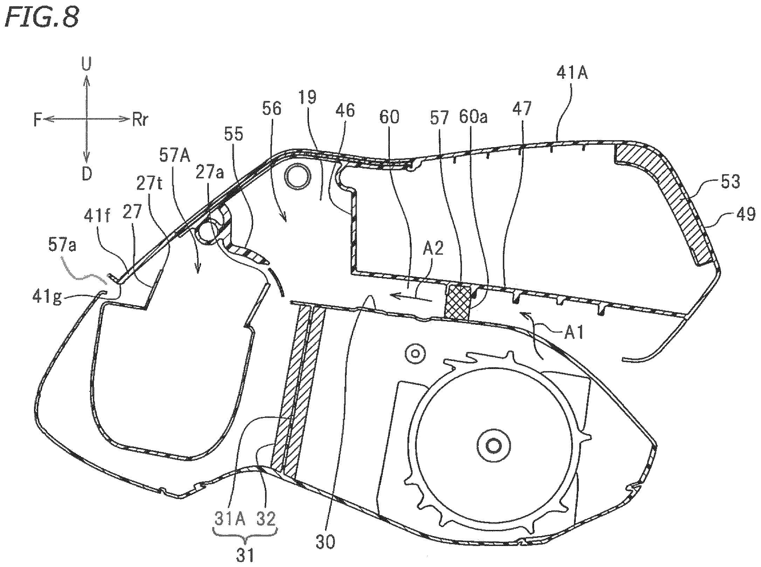

The first case part 41A includes a first side plate 19 extending along the vehicle vertical axis and along the vehicle fore-and-aft axis, and a vertical plate 46 extending laterally outward from the first side plate 19 and extending along the vehicle vertical axis. Fig. 8 is a cross-sectional view taken along line VIII-VIII in Fig. 3. As illustrated in Fig. 8, the first case part 41A includes a horizontal plate 47 extending rearward from the lower end of the vertical plate 46 and extending along the vehicle lateral axis. The horizontal plate 47 is disposed above the transmission case 25 and spaced apart from the transmission case 25. As illustrated in Fig. 6, the first case part 41A includes a second side plate 48 extending rearward along the vehicle fore-and-aft axis from a laterally outer end portion of the vertical plate 46 and extending along the vehicle vertical axis from a laterally outer end portion of the horizontal plate 47. The first case part 41A also includes a vertical plate 49 extending along the vehicle vertical axis from a rear end portion of the horizontal plate 47 and extending laterally inward from a rear end portion of the second side plate 48. The vertical plate 49 is positioned at the rear of the vertical plate 46. The vertical plate 46 may be perpendicular to the first side plate 19. However, in the present preferred embodiment, the vertical plate 46 is inclined rearward toward the left with respect to the first side plate 19. The first side plate 19, the vertical plate 46, the horizontal plate 47, the second side plate 48, and the vertical plate 49 may be either flat plates or curved plates. The shapes of the first side plate 19, the vertical plate 46, the horizontal plate 47, the second side plate 48, and the vertical plate 49 are not limited to specific shapes.

An intake duct 44 penetrates through the vertical plate 46. The intake duct 44 includes an inlet 44a positioned in front of the vertical plate 46 and an outlet 44b positioned behind the vertical plate 46. The inlet 44a is formed into a shape that is wider toward its end. In other words, the inlet 44a is formed into what is called a bell mouth shape. The inlet 44a is disposed outside the air cleaner case 41. The outlet 44b is disposed inside the air cleaner case 41. The outlet 44b has an opening that opens in the interior of the unfiltered-air chamber 41a. The intake duct 44 extends along the vehicle fore-and-aft axis. The intake duct 44 may be either in a linear shape or a curved shape. The center line of the intake duct 44 may be either parallel or non-parallel to the vehicle fore-and-aft axis. In the present preferred embodiment, the intake duct 44 is formed to be parallel to the vehicle fore-and-aft axis and in a linear shape. The filter element 43 is also disposed to be parallel to the vehicle fore-and-aft axis. The intake duct 44 is disposed parallel to the filter element 43.

A collecting member 53 is secured to the vertical plate 49. The collecting member 53 is a member for collecting dust or water in the air, which is made of a sponge, for example. The material for the collecting member 53 is, however, not limited to a particular material. The collecting member 53 is disposed in the unfiltered-air chamber 41a inside the air cleaner case 41. At least a portion of the collecting member 53 is disposed on the extension line 44e of the center line of the intake duct 44 that extends from the outlet 44b.

The air cleaner case cover 45 is disposed laterally outward of the air cleaner case 41. The air cleaner case cover 45 is assembled to the air cleaner case 41. Although not shown in the drawings, the air cleaner case cover 45 is fastened to the first case part 41A by threaded fasteners. In the present description, the term "threaded fastener" means a fastener having an external helical thread, and threaded fasteners include bolts and screws, for example. As already mentioned above, the first case part 41A and the second case part 41B of the air cleaner case 41 are fastened to each other by threaded fasteners 54 (see Fig. 7). The air cleaner case cover 45 has holes 62 positioned on the extension lines of the threaded fasteners 54. The threaded fasteners 54 can be screwed in or out by inserting a tool such as a screwdriver into the holes 62. Without removing the air cleaner case cover 45 from the first case part 41A, the threaded fasteners 54 can be screwed in or out. This means that without removing the air cleaner case cover 45 from the first case part 41A in advance, the threaded fasteners 54 can be rotated by a tool inserted into the holes 62, so that the first case part 41A can be removed from the second case part 41B. This affords easy replacement work of the filter element 43.

As illustrated in Figs. 6 and 8, the air cleaner case cover 45 is provided with a partition plate 55 for separating the inlet 27a of the intake duct 27 and the inlet 44a of the intake duct 44 from each other. The partition plate 55 extends laterally inwardly from the air cleaner case cover 45. The shape of the partition plate 55 is not limited to a particular shape. However, in the present preferred embodiment, the partition plate 55 extends gradually downward toward the rear when viewed in a side view of the vehicle, as illustrated in Fig. 8. It is also possible that the partition plate 55 may be provided on the air cleaner case 41. That is, the air cleaner case cover 41 may be provided with a partition plate 55 extending laterally outward from the air cleaner case 41. Altematively, the partition plate 55 may be formed by a partition plate part extending laterally inward from the air cleaner case cover 45 and another partition plate part extending laterally outward from the air cleaner case 41. It is possible that a sponge may or may not be disposed around the partition plate 55. The first side plate 19, the vertical plate 46, the partition plate 55, and the transmission case 25 together define an upstream intake chamber 56 around the inlet 44a of the intake duct 44. The inlet 44a of the intake duct 44 has an opening that is open in the interior of the upstream intake chamber 56.

As illustrated in Fig. 6, the air cleaner 40 includes a resonator 70 for reducing air intake noise. The resonator 70 includes a chamber 71, defined by the first side plate 19 of the first case part 41A and the plate portion 42a of the partition plate 42, and a tube 72 (see Fig. 7), extending laterally outward from the first case part 41A within the upstream intake chamber 56. An inlet 73 is formed at an end of the tube 72. The inlet 73 has an opening that is open in the interior of the upstream intake chamber 56. In the present preferred embodiment, the inlet 73 is disposed above the intake duct 44. The center of the inlet 73 is positioned rearward relative to the front end of the intake duct 44. It should be noted, however, that the position of the inlet 73 is not limited to a particular position. The chamber 71 is disposed between the upstream intake chamber 56 and the filtered-air chamber 41b. Note that the filtered-air chamber 41b forms the downstream intake chamber. The chamber 71 is formed in a laterally compact shape, which is elongated along the fore-and-aft axis. The lateral dimension of the chamber 71 is smaller than the fore-and-aft dimension thereof.

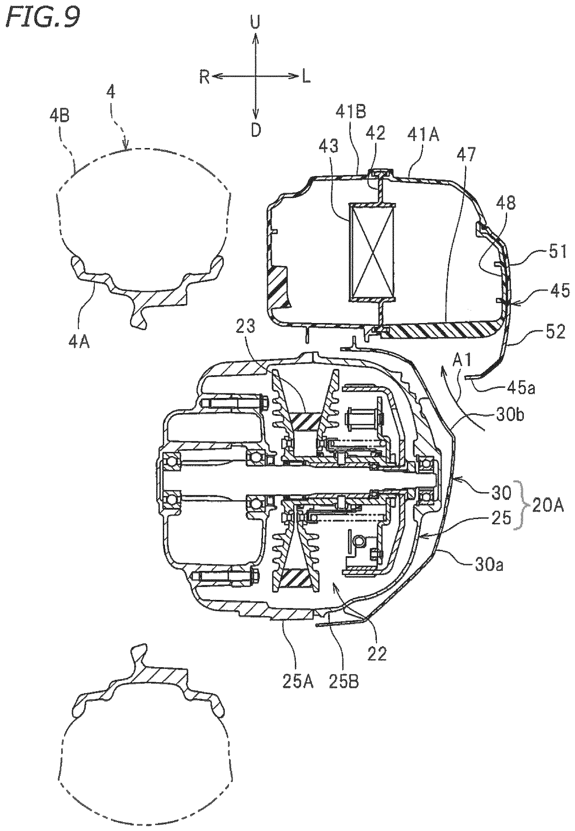

Fig. 9 is a cross-sectional view taken along line IX-IX in Fig. 2. As illustrated in Fig. 9, the air cleaner case cover 45 includes an overlaying portion 51 overlaying the second side plate 48 of the air cleaner case 41, and a downwardly-extending portion 52 extending downward from the overlaying portion 51. The overlaying portion 51 is not spaced away from the second side plate 48, and no gap such as to allow the air to flow through is provided between the overlaying portion 51 and the second side plate 48. As illustrated in Fig. 8, the downwardly-extending portion 52, the horizontal plate 47, and the transmission case cover 30 together define an intake passage 60 extending along the vehicle fore-and-aft axis. The front end portion of the intake passage 60 is connected to the upstream intake chamber 56. The rear end portion of the intake passage 60 is open. The rear end portion of the intake passage 60 forms a rear intake port 60a. The rear intake port 60a is positioned rearward relative to the vehicle fore-and-aft midpoint 41m (see Fig. 6) of the air cleaner case 41. A pre-filter element 57 is disposed between the horizontal plate 47 and the transmission case cover 30 and inside the intake passage 60. The pre-filter element 57 serves to clean the air A2 passing through the intake passage 60. The form of the pre-filter element 57 and the materials for the pre-filter element 57 are not limited to any particular form or material. Herein, the pre-filter element 57 is formed of sponge.

As illustrated in Fig. 9, a gap is provided behind the rear intake port 60a between the air cleaner case cover 45 and the transmission case cover 30. Hereinafter, a portion of the air cleaner case cover 45 that is located rearward relative to the rear intake port 60a is referred to as a rear intake section 45a. A gap that is at least sidewardly open is provided between the rear intake section 45a and the transmission case cover 30. The air A1 that is sucked sidewardly through this gap flows through the rear intake port 60a into the intake passage 60. In a region that is rearward relative to the rear intake port 60a, the transmission case cover 30 includes a lower inclined portion 30a inclined laterally more outward toward its top, and an upper inclined portion 30b inclined more inward toward its top. The upper inclined portion 30b is positioned above the lower inclined portion 30a. As illustrated in Fig. 2, the upper inclined portion 30b and the lower inclined portion 30a are disposed below the rear intake section 45a, as viewed in a side view of the vehicle.

The front portion of the air cleaner case 41 is disposed above the intake duct 27. As illustrated in Fig. 8, the lower end 41g of the front portion 41f of the air cleaner case 41 is disposed downward relative to the upper end 27t of the intake duct 27. The front portion 41f of the air cleaner case 41 covers a surrounding portion of the inlet 27a of the intake duct 27. As illustrated in Fig. 2, the air cleaner case cover 45 includes a front intake section 45b positioned at a side of the front portion 41f of the air cleaner case 41. The lower end of the front intake section 45b is disposed downward relative to the upper end of the intake duct 27. As illustrated in Fig. 8, the front portion 41f of the air cleaner case 41, the partition plate 55, and the front intake section 45b together define an intake chamber 57A around the inlet 27a of the intake duct 27. The inlet 27a of the intake duct 27 has an opening that is open in the interior of the intake chamber 57A.

A gap is provided vertically between the front portion 41f of the air cleaner case 41 and the transmission case cover 30. This gap forms a front intake port 57a for sucking air from the front toward the intake duct 27. As illustrated in Fig. 2, a gap is provided vertically between the front intake section 45b of the air cleaner case 45 and the transmission case cover 30. This gap forms a side intake port 57b for sucking air from the side toward the intake duct 27. The front intake section 45b is provided with ribs 58 extending along the vehicle fore-and-aft axis. The ribs 58 are linear protrusions protruding laterally outward and extending along the vehicle fore-and-aft axis. Although a plurality of ribs 58 are provided in the present preferred embodiment, it is possible that the number of the ribs 58 may be 1.

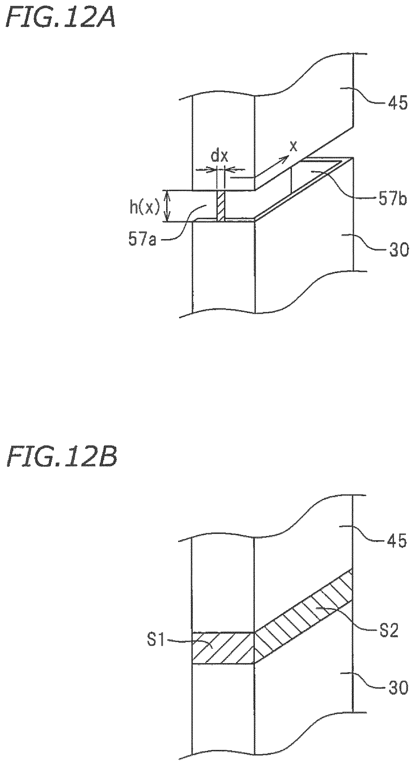

The area of the opening between the air cleaner case cover 45 and the transmission case cover 30 is larger than the minimum flow passage cross-sectional area of the intake duct 27. As illustrated in Fig. 12A, an area S of the opening between the air cleaner case cover 45 and the transmission case cover 30 is defined as S=f h(x)dx, where x denotes a coordinate axis along the periphery of the lower edge of the air cleaner case cover 45 or the upper edge of the transmission case cover 30, and h(x) denotes a gap between the lower edge of the air cleaner case cover 45 and the upper edge of the transmission case cover 30 along the vertical line. S1 and S2 shown in Fig. 12B denote an area of opening of the front intake port 57a and the side intake port 57b, respectively. In the present preferred embodiment, the total area S1+S2 of the openings of the front intake port 57a and the side intake port 57b is larger than the minimum flow passage cross-sectional area of the intake duct 27. It is also possible that the area S2 of the opening of the side intake port 57b may be larger than the minimum flow passage cross-sectional area of the intake duct 27. Note that the term "flow passage cross-sectional area" means an area of the cross section of a flow passage that is orthogonal to the central axis of the flow passage.

As illustrated in Figs. 5 and 7, a portion of the transmission case cover 30 that is behind the intake duct 27 is furnished with a plate member 59 extending laterally outward. As illustrated in Fig. 7, the air cleaner case cover 45 includes a wall portion 45d positioned behind the plate member 59. The lower end of the wall portion 45d is positioned downward relative to the upper end of the plate member 59. The plate member 59 and the wall portion 45d together form a labyrinth structure 65 at the rear of the intake duct 27.

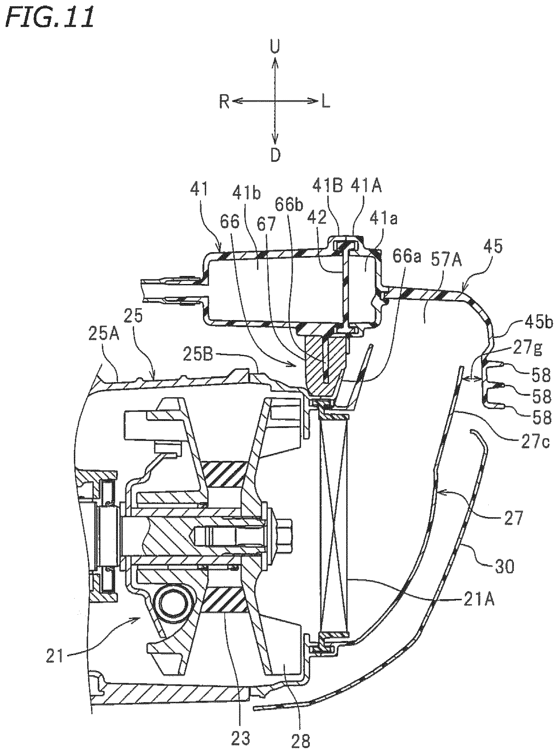

Fig. 11 is a cross-sectional view taken along line XI-XI in Fig. 2. As illustrated in Fig. 11, a laterally outward portion 27c of the intake duct 27 is inclined laterally more outward toward its top, with respect to the vertical line. A gap 27g between the portion 27c and the front intake section 45b of the air cleaner case 45 narrows toward the end of the intake duct 27. It is also possible that the intake duct 27 may have a portion in which a gap with the transmission case cover 30 narrows toward its end. The upper end of the intake duct 27 is positioned upward relative to the lower end of the front intake section 45b. The front intake section 45b and the upper portion of the intake duct 27 together form a labyrinth structure.

Furthermore, another labyrinth structure 66 is formed above the transmission case 25 and laterally inward of the intake duct 27. The labyrinth structure 66 includes a plate member 66a extending upward from the transmission case cover 30 and a plate member 66b extending downward from the air cleaner case 41. The upper end of the plate member 66a is positioned upward relative to the lower end of the plate member 66b. Although the plate member 66a is disposed laterally outward relative to the plate member 66b in the present preferred embodiment, the plate member 66a may be disposed laterally inward relative to the plate member 66b. Although the plate member 66a is provided on the transmission case cover 30 in the present preferred embodiment, the plate member 66a may be provided on the transmission case 25. Although the plate member 66a is provided on the second case part 41B, it is also possible that the plate member 66a be provided on the first case part 41A. A sponge 67 is disposed around the plate member 66b. It is, however, also possible to eliminate the sponge 67.

As described above, the motorcycle 1 according to the present preferred embodiment does not require a long duct extending upward from the transmission case 25. This prevents the vehicle from getting larger in size. The inlet 27a of the intake duct 27 for introducing air into the transmission case 25 is supplied with the air that is sucked from the side intake port 57b formed between the air cleaner case cover 45 and the transmission case cover 30. The inlet 44a of the intake duct 44 for introducing air into the air cleaner case 41 is supplied with the air that is sucked from the rear intake port 60a formed between the air cleaner case cover 45 and the transmission case cover 30. This makes it possible to prevent dust and water from entering the air cleaner 40 and the CVT 20. Moreover, the inlet 27a of the intake duct 27 and the inlet 44a of the intake duct 44 are separated by the partition plate 55. This makes it possible to supply a sufficient amount of air to both the air cleaner 40 and the CVT 20. Thus, the motorcycle 1 according to the present preferred embodiment prevents dust and water from entering the air cleaner 40 and the CVT 20, keeps the vehicle size from becoming larger, and is capable of supplying a sufficient amount of air to both the air cleaner 40 and the CVT 20.

According to the present preferred embodiment, the labyrinth structure 65 is provided behind the intake duct 27, as illustrated in Fig. 7. This labyrinth structure 65 makes it possible to prevent dust and water from entering the air cleaner 40 from the rear of the intake duct 27. As a result, dust and water are prevented from entering the CVT 20 more effectively.

In the present preferred embodiment, the intake duct 27 includes the portion 27c in which the gap 27g with the air cleaner case cover 45 or with the transmission case cover 30 narrows toward the end of the intake duct 27. As a result, dust and water are prevented from entering the intake duct 27 more effectively.

In the present preferred embodiment, the ribs 58 extending along the vehicle fore-and-aft axis are provided on a portion of the air cleaner case cover 45 above the side intake port 57b, as illustrated in Fig. 2. Water running along the surface of the air cleaner case cover 45 is guided to the rear by the ribs 58 easily. This prevents water from entering the side intake port 57b and thus prevents water from entering the CVT 20 more effectively.

In the present preferred embodiment, the labyrinth structure 66 is formed above the transmission case 25 and laterally inward of the intake duct 27, as illustrated in Fig. 11. This labyrinth structure 66 can prevent dust and water swirled up by the rear wheel 4 from entering the intake duct 27. As a result, dust and water are prevented from entering the CVT 20 more effectively.

In the present preferred embodiment, the inlet 27a of the intake duct 27 opens upwardly, and the inlet 44a of the intake duct 44 opens frontwardly at a position rearward relative to the inlet 27a. The partition plate 55 extends between the inlet 27a and the inlet 44a so as to extend gradually downward toward the rear. The partition plate 55 disposed in this way can guide air toward the inlet 27a and the inlet 44a. This makes it possible to supply a sufficient amount of air to both the air cleaner 40 and the CVT 20.

In the present preferred embodiment, the horizontal plate 47 of the air cleaner case 41, the transmission unit 20A, and the downwardly-extending portion 52 of the air cleaner case cover 45 together form the intake passage 60 connected to the upstream intake chamber 56. No gap for forming the intake passage 60 is provided between the overlaying portion 51 of the air cleaner case cover 45 and the second side plate 48 of the air cleaner case 41. As a result, the air cleaner case cover 45 is inhibited from protruding laterally outward, so that the lateral dimension can be kept small. In addition, the inlet 44a of the intake duct 44 is disposed frontward relative to the vehicle fore-and-aft midpoint 41m of the air cleaner case 41, and the rear intake port 60a of the intake passage 60 is positioned rearward relative to the vehicle fore-and-aft midpoint 41m of the air cleaner case 41. This enables the intake passage 60 that is upstream of the intake duct 44 to have a sufficient length. Thus, while the air cleaner 40 is disposed above the transmission unit 20A, the intake passage 60 that is upstream of the intake duct 44 is allowed to have a sufficient length, so that the lateral dimension can be kept small.

In the foregoing preferred embodiment, the transmission case 25 and the transmission case cover 30 of the transmission unit 20A are separate parts. However, the transmission case 25 and the transmission case cover 30 may be an integral part.

In the foregoing preferred embodiment, the first case part 41A and the air cleaner case cover 45 of the air cleaner 40 are separate parts. However, the first case part 41A and the air cleaner case cover 45 may be an integral part.

In the foregoing preferred embodiment, the intake duct 27 and the transmission case cover 30 are made of synthetic resin. The first case part 41A, the second case part 41B, the partition plate 42, the intake duct 44, and the intake pipe 85 are also made of synthetic resin. However, the material for these components is not limited to synthetic resin.

### REFERENCE SIGNS LIST

- 1 --: Scooter type motorcycle
- 4 --: Rear wheel
- 20 -: V-belt type continuously variable transmission
- 25 --: Transmission case
- 27 --: Intake duct (first intake duct)
- 27a --: Inlet of intake duct (first inlet)
- 30 --: Transmission case cover
- 41 --: Air cleaner case
- 44 --: Intake duct (second intake duct)
- 44a --: Inlet of intake duct (second inlet)
- 45 --: Air cleaner case cover
- 55 --: Partition plate
- 57b --: Side intake port
- 60a --: Rear intake port

## Claims

1. A scooter type motorcycle comprising:
a rear wheel (4);
a transmission case (25) disposed sideward of the rear wheel (4);
a V-belt type continuously variable transmission (20) disposed in the transmission case (25);
a first intake duct (27) provided on the transmission case (25) and including a first inlet (27a) positioned frontward relative to a vehicle fore-and-aft midpoint of the transmission case (25);
an air cleaner case (41) disposed above the transmission case (25);
a second intake duct (44) provided on the air cleaner case (41) and including a second inlet (44a) positioned frontward relative to a vehicle fore-and-aft midpoint (41m) of the air cleaner case (41);
an air cleaner case cover (45) disposed laterally outward of the air cleaner case (41) and the second intake duct (44);
a transmission case cover (30) disposed laterally outward of the transmission case (25) and the first intake duct (27) and disposed below the air cleaner case cover (45); and
a partition plate (55) disposed between the first inlet (27a) of the first intake duct (27) and the second inlet (44a) of the second intake duct (44), and wherein:
a side intake port (57b) for sucking air toward the first inlet (27a) is formed between the air cleaner case cover (45) and the transmission case cover (30), and laterally outward of the first inlet (27a),
an area of an opening between the air cleaner case cover (45) and the transmission case cover (30) is larger than a minimum flow passage cross-sectional area of the first intake duct (27); and
a rear intake port (60a) for sucking air toward the second inlet (44a) is formed between the air cleaner case cover (45) and the transmission case cover (30), and rearward relative to the first inlet (27a); and
at least a portion of the rear intake port (60a) is disposed laterally inward relative to the side intake port (57b), **characterized in that**
a laterally extending plate member (59) is provided in a portion of the transmission case cover (30) that is rearward of the first intake duct (27);
the air cleaner case cover (45) includes a wall portion (45d) positioned behind the plate member (59) and including a lower end positioned downward relative to an upper end of the plate member (59); and
the plate member (59) and the wall portion (45d) together form a labyrinth structure (65) positioned rearward of the first intake duct (27).

2. The scooter type motorcycle according to claim 1, **characterized in that** the first intake duct (27) includes a portion in which a gap (27g) between the first intake duct (27) and the air cleaner case cover (45) or between the first intake duct (27) and the transmission case cover (30) is narrower toward an end of the first intake duct (27).

3. The scooter type motorcycle according to claim 1 or 2, **characterized by** a rib (58) extending along a vehicle fore-and-aft axis, provided on a portion of the air cleaner case cover (45) above the side intake port (57b).

4. The scooter type motorcycle according to any one of claims 1 to 3, **characterized by** a labyrinth structure (66) formed above the transmission case (25) and laterally inward of the first intake duct (27).

5. The scooter type motorcycle according to any one of claims 1 to 4, **characterized in that** the first inlet (27a) opens upwardly;
the second inlet (44a) opens frontwardly at a position rearward relative to the first inlet (27a); and
the partition plate (55) extends between the first inlet (27a) and the second inlet (44a) so as to extend gradually downward toward the rear.

6. The scooter type motorcycle according to any one of claims 1 to 5, **characterized in that** the air cleaner case (41) comprises: a first side plate (19) extending along a vehicle vertical axis and a vehicle fore-and-aft axis; a vertical plate (46), disposed upward relative to the transmission case (25), extending laterally outward from the first side plate (19) and extending along the vehicle vertical axis; a horizontal plate (47) extending rearward from a lower end of the vertical plate (46) and extending along a vehicle lateral axis, the horizontal plate (47) spaced upwardly apart from the transmission case (25); and a second side plate (48) extending rearward along the vehicle fore-and-aft axis from a laterally outer end portion of the vertical plate (46) and extending along the vehicle vertical axis from a laterally outer end portion of the horizontal plate (47);
the second intake duct (44) penetrates through the vertical plate (46);
the vertical plate (46), the horizontal plate (47), and the second side plate (48) together define at least a portion of a downstream intake chamber (41c);
the air cleaner case cover (45) comprises a spacing portion (50) disposed sideward of the first side plate (19) and spaced apart from the first side plate (19), an overlaying portion (51) overlaying the second side plate (48) so as not to be spaced apart from the second side plate (48), and a downwardly-extending portion (52) extending downward from the overlaying portion (51);
the spacing portion (50) of the air cleaner case cover (45), the first side plate (19), and the vertical plate (46) together define at least a portion of an upstream intake chamber (56); and
the horizontal plate (47), the transmission case (25), and the downwardly-extending portion (52) of the air cleaner case cover (45) together form an intake passage (60) being connected to the upstream intake chamber (56) and having the rear intake port (60a).

## Patentansprüche

1. Ein Scooter-Typ-Motorrad, das umfasst:
ein Hinter-Rad (4)
ein Getriebe-Gehäuse (25), das seitlich von dem Hinter-Rad (4) positioniert ist;
ein V-Riemen-Typ-Kontinuierlich-Variables-Getriebe (20), das in dem Getriebe-Gehäuse (25) positioniert ist;
einen ersten Einlass-Kanal (27), der an dem Getriebe-Gehäuse (25) vorgesehen ist, und einen ersten Einlass (27a) beinhaltet, der vorwärts relativ zu einem Fahrzeug-Vorder-und-Rück-Mittelpunkt von dem Getriebe-Gehäuse positioniert ist;
ein Luft-Filter-Gehäuse (41), das oberhalb des Getriebe-Gehäuses (25) positioniert ist;
einen zweiten Einlass-Kanal (44), der an dem Luft-Filter-Gehäuse (41) vorgesehen ist, und einen zweiten Einlass (44a) beinhaltet, der vorwärts relativ zu einem Fahrzeug-Vorder-und-Rück-Mittelpunkt (41m) von dem Luft-Filter-Gehäuse (41) positioniert ist;
eine Luft-Filter-Gehäuse-Abdeckung (45), die quer außerhalb von dem Luft-Filter-Gehäuse (41) und dem zweiten Einlass-Kanal (44) positioniert ist;
eine Getriebe-Gehäuse-Abdeckung (30), die quer außerhalb von dem Getriebe-Gehäuse (25) und dem ersten Einlass-Kanal (27) positioniert ist, und unterhalb der Luft-Filter-Gehäuse-Abdeckung (45) positioniert ist; und
eine Unterteilungs-Platte (55), die zwischen dem ersten Einlass (27a) und dem ersten Einlass-Kanal (27) und dem zweiten Einlass (44a) von dem zweiten Einlass-Kanal (44) positioniert ist, und wobei:
ein Seiten-Einlass-Anschluss (57b) zum Saugen von Luft zu dem ersten Einlass (27a) zwischen der Luft-Filter-Gehäuse-Abdeckung (45) und der Getriebe-Gehäuse-Abdeckung (30), und quer außerhalb von dem ersten Einlass (27a) ausgebildet ist, ein Bereich von einer Öffnung zwischen der Luft-Filter-Gehäuse-Abdeckung (45) und der Getriebe-Gehäuse-Abdeckung (30) ist größer als ein Minimal-StrömungsDurchgang-Querschnitts-Bereich von dem ersten Einlass-Kanal (27); und
ein Rück-Einlass-Anschluss (60a) zum Saugen von Luft zu dem zweiten Einlass (44a) ist zwischen der Luft-Filter-Gehäuse-Abdeckung (45) und der Getriebe-Gehäuse-Abdeckung (30), und rückwärtig relativ zu dem ersten Einlass (27a) ausgebildet; und
zumindest ein Abschnitt von dem Rück-Einlass-Anschluss (60a) ist quer innerhalb relativ zu dem Seiten-Einlass-Anschluss (57b) positioniert, **dadurch gekennzeichnet, dass** ein Quer-Erstreckungs-Platten-Element (59) in einem Abschnitt von der Getriebe-Gehäuse-Abdeckung (30), der rückwärtig von dem ersten Einlass-Kanal (27) ist, vorgesehen ist;
die Luft-Filter-Gehäuse-Abdeckung (45) beinhaltet einen Wand-Abschnitt (45d), der hinter dem Platten-Element (59) positioniert ist und ein unteres Ende, positioniert unterhalb relativ zu einem oberen Ende von dem Platten-Element (59), beinhaltet; und
das Platten-Element (59) und der Wand-Abschnitt (45d) bilden zusammen eine Labyrinth-Struktur (65), die rückwärtig von dem ersten Einlass-Kanal (27) positioniert ist.

2. Das Scooter-Typ-Motorrad gemäß Anspruch 1, **dadurch gekennzeichnet, dass** der erste Einlass-Kanal (27) einen Abschnitt beinhaltet, in dem ein Spalt (27g) zwischen dem ersten Einlass-Kanal (27) und der Luft-Filter-Gehäuse-Abdeckung (45) oder zwischen dem ersten Einlass-Kanal (27) und der Getriebe-Gehäuse-Abdeckung (30) zu einem Ende von dem ersten Einlass-Kanal (27) enger ist.

3. Das Scooter-Typ-Motorrad gemäß Anspruch 1 oder 2, **gekennzeichnet durch** eine Rippe (58), die sich entlang einer Fahrzeug-Vorder-und-Rück-Achse erstreckt, vorgesehen an einem Abschnitt von der Luft-Filter-Gehäuse-Abdeckung (45), oberhalb des Seiten-Einlass-Anschlusses (57b).

4. Das Scooter-Typ-Motorrad gemäß zu irgendeinem der Ansprüche 1 bis 3, **gekennzeichnet durch** eine Labyrinth-Struktur (66), die oberhalb des Getriebe-Gehäuses (25) und quer innerhalb von dem ersten Einlass-Kanal (27) ausgebildet ist.

5. Das Scooter-Typ-Motorrad gemäß zu irgendeinem der Ansprüche 1 bis 4, **dadurch gekennzeichnet, dass** der erste Einlass (27a) sich nach oben öffnet;
der zweite Einlass (44a) sich nach vorne an einer Position rückwärtig relativ zu dem ersten Einlass (27a) öffnet, und
die Unterteilungs-Platte (55) sich zwischen dem ersten Einlass (27a) und dem zweiten Einlass (44a) erstreckt, so dass diese sich graduell nach unten nach hinten erstreckt.

6. Das Scooter-Typ-Motorrad gemäß zu irgendeinem der Ansprüche 1 bis 5, **dadurch gekennzeichnet, dass** das Luft-Filter-Gehäuse (41) umfasst:
eine erste Seiten-Platte (19), die sich entlang einer Fahrzeug-Vertikal-Achse und einer Fahrzeug-Vorder-und-Rück-Achse erstreckt;
eine Vertikal-Platte (46), die oberhalb relativ zu dem Getriebe-Gehäuse (25) positioniert ist, und sich quer nach außen von der ersten Seiten-Platte (19) erstreckt, und sich entlang der Fahrzeug-Vertikal-Achse erstreckt;
eine Horizontal-Platte (47), die sich nach hinten von einem unteren Ende von der Vertikal-Platte (46) erstreckt, und sich entlang einer Fahrzeug-Quer-Achse erstreckt, die Horizontal-Platte (47) ist nach oben von dem Getriebe-Gehäuse (25) beabstandet; und eine zweite Seiten-Platte (48), die sich nach hinten entlang der Fahrzeug-Vorder-und-Rück-Achse von einem Quer-Außen-End-Abschnitt von der Vertikal-Platte (46) erstreckt, und sich entlang der Fahrzeug-Vertikal-Achse von einem Quer-Außen-End-Abschnitt von der Horizontal-Platte (47) erstreckt;
der zweite Einlass-Kanal (44) tritt durch die Vertikal-Platte (46) hindurch;
die Vertikal-Platte (46), die Horizontal-Platte (47) und die zweite Seiten-Platte (48) definieren zusammen zumindest einen Abschnitt von einer Strom-Ab-Einlass-Kammer (41c);
die Luft-Filter-Gehäuse-Abdeckung (45) umfasst einen Beabstandungs-Abschnitt (50), der seitlich von der ersten Seiten-Platte (19) positioniert ist, und von der ersten Seiten-Platte (19) beabstandet ist, einen Überlagerungs-Abschnitt (51), der die zweite Seiten-Platte (48) überlagert, so dass dieser nicht von der zweiten Seiten-Platte (48) beabstandet ist, und einen nach unten erstreckenden Abschnitt (52) der sich nach unten von dem Überlagerungs-Abschnitt (51) erstreckt;
der Beabstandungs-Abschnitt (50) von der Luft-Filter-Gehäuse-Abdeckung (45), die erste Seiten-Platte (19) und die Vertikal-Platte (46) definieren zusammen zumindest einen Abschnitt von einer Strom-Auf-Einlass-Kammer (56); und
die Horizontal-Platte (47), das Getriebe-Gehäuse (25) und der sich nach unten erstreckende Abschnitt (52) von der Luft-Filter-Gehäuse-Abdeckung (45) bilden zusammen einen Einlass-Durchgang (60), der mit der Strom-Auf-Einlass-Kammer (46) verbunden ist und den Rück-Einlass-Anschluss (60a) hat.

## Revendications

1. Motocyclette de type scooter, comprenant :
une roue arrière (4) ;
un boîtier de transmission (25) disposé latéralement par rapport à la roue arrière (4) ;
une transmission variable en continu de type courroie en V (20) disposée dans le boîtier de transmission (25) ;
un premier conduit d'admission (27) pourvu sur le boîtier de transmission (25) et comportant une première entrée (27a) du boîtier de transmission (25) positionnée vers l'avant par rapport à un point médian avant-arrière du véhicule ;
un boîtier de filtre à air (41) disposé au-dessus du boîtier de transmission (25) ;
un deuxième conduit d'admission (44) pourvu sur le boîtier de filtre à air (41) et comportant une deuxième entrée (44a) positionnée vers l'avant par rapport à un point médian avant-arrière du véhicule (41m) du boîtier de filtre à air (41) ;
un carénage du boîtier de filtre à air (45) disposé latéralement à l'extérieur du boîtier de filtre à air (41) et du deuxième conduit d'admission (44) ;
un carénage du boîtier de transmission (30) disposé latéralement à l'extérieur du boîtier de transmission (25) et du premier conduit d'admission (27) et disposé au-dessous du carénage du boîtier de filtre à air (45) ; et
une plaque de séparation (55) disposée entre la première entrée (27a) du premier conduit d'admission (27) et la deuxième entrée (44a) du deuxième conduit d'admission (44), et dans laquelle :
un orifice d'admission latéral (57b) pour aspirer de l'air vers la première entrée (27a) est formé entre le carénage du boîtier de filtre à air (45) et le carénage du boîtier de transmission (30), et latéralement vers l'extérieur de la première entrée (27a),
la surface d'une ouverture entre le carénage du boîtier de filtre à air (45) et le carénage du boîtier de transmission (30) est supérieure à la surface minimale en section transversale du passage d'écoulement du premier conduit d'admission (27) ; et
un orifice d'admission arrière (60a) pour aspirer de l'air vers la deuxième entrée (44a) est formé entre le carénage du boîtier de filtre à air (45) et le carénage du boîtier de transmission (30), et vers l'arrière par rapport à la première entrée (27a) ; et
au moins une portion de l'orifice d'admission arrière (60a) est disposée latéralement vers l'intérieur par rapport à l'orifice d'admission latéral (57b),
**caractérisée en ce que**
un élément de plaque s'étendant latéralement (59) est pourvu dans une portion du carénage du boîtier de transmission (30) qui est à l'arrière du premier conduit d'admission (27) ;
le carénage du boîtier de filtre à air (45) comprend une portion de paroi (45d) positionnée derrière l'élément de plaque (59) et comportant une extrémité inférieure positionnée vers le bas par rapport à une extrémité supérieure de l'élément de plaque (59) ; et
l'élément de plaque (59) et la portion de paroi (45d) forment ensemble une structure de labyrinthe (65) positionnée à l'arrière du premier conduit d'admission (27) .

2. Motocyclette de type scooter selon la revendication 1, **caractérisée en ce que** le premier conduit d'admission (27) comporte une portion dans laquelle un intervalle (27g) entre le premier conduit d'admission (27) et le carénage du boîtier de filtre à air (45) ou entre le premier conduit d'admission (27) et le carénage du boîtier de transmission (30) est plus étroit vers une extrémité du premier conduit d'admission (27).

3. Motocyclette de type scooter selon la revendication 1 ou 2, **caractérisée par** une nervure (58) qui s'étend selon l'axe avant-arrière du véhicule, pourvue sur une portion du carénage du boîtier de filtre à air (45) au-dessus de l'orifice d'admission latéral (57b).

4. Motocyclette de type scooter selon l'une quelconque des revendications 1 à 3, **caractérisée par** une structure de labyrinthe (66) formée au-dessus du boîtier de transmission (25) et latéralement vers l'intérieur du premier conduit d'admission (27).

5. Motocyclette de type scooter selon l'une quelconque des revendications 1 à 4, **caractérisée en ce que**
la première entrée (27a) s'ouvre vers le haut ;
la deuxième entrée (44a) s'ouvre vers l'avant à une position vers l'arrière par rapport à la première entrée (27a) ; et
la plaque de séparation (55) s'étend entre la première entrée (27a) et la deuxième entrée (44a) de manière à s'étendre vers le bas graduellement vers l'arrière.

6. Motocyclette de type scooter selon l'une quelconque des revendications 1 à 5, **caractérisée en ce que**
le boîtier de filtre à air (41) comprend : une première plaque latérale (19) qui s'étend selon un axe vertical du véhicule et un axe avant-arrière du véhicule ; une plaque verticale (46), disposée vers le haut par rapport au boîtier de transmission (25), qui s'étend latéralement vers l'extérieur depuis la première plaque latérale (19) et qui s'étend selon l'axe vertical du véhicule ; une plaque horizontale (47) qui s'étend vers l'arrière depuis une extrémité inférieure de la plaque verticale (46) et qui s'étend selon un axe latéral du véhicule, la plaque horizontale (47) étant espacée du boîtier de transmission (25) en s'écartant vers le haut ; et une deuxième plaque latérale (48) qui s'étend vers l'arrière selon l'axe avant-arrière du véhicule depuis une portion d'extrémité latéralement externe de la plaque verticale (46) et qui s'étend selon l'axe vertical du véhicule depuis une portion d'extrémité latéralement externe de la plaque horizontale (47) ;
le deuxième conduit d'admission (44) traverse la plaque verticale (46) ;
la plaque verticale (46), la plaque horizontale (47) et la deuxième plaque latérale (48) définissent ensemble au moins une portion d'une chambre d'admission aval (41c) ;
le carénage du boîtier de filtre à air (45) comprend une portion d'espacement (50) disposée latéralement par rapport à la première plaque latérale (19) et espacée de la première plaque latérale (19), une portion chevauchante (51) qui chevauche la deuxième plaque latérale (48) de manière à ne pas être espacée de la deuxième plaque latérale (48), et une portion s'étendant vers le bas (52) qui s'étend vers le bas depuis la portion chevauchante (51) ;
la portion d'espacement (50) du carénage du boîtier de filtre à air (45), la première plaque latérale (19) et la plaque verticale (46) définissent ensemble au moins une portion d'une chambre d'admission amont (56) ; et
la plaque horizontale (47), le boîtier de transmission (25) et la portion s'étendant vers le bas (52) du carénage du boîtier de filtre à air (45) forment ensemble un passage d'admission (60) connecté à la chambre d'admission amont (56) et comportant l'orifice d'admission arrière (60a).
